# FASCICULE DE BREVET EUROPEEN

(11) **EP 2 053 199 B1**
(45) Date de publication et mention de la délivrance du brevet: **05.01.2011**
(21) Numéro de dépôt: 08166403.9
(22) Date de dépôt: 10.10.2008
(51) Int. Cl.: F01D 5/30, F01D 21/04

(54) **Roue de turbomachine**
Rad eines Turbotriebwerks
Turbomachine wheel

(30) Priorité: 22.10.2007 FR 0707358
(43) Date de publication de la demande: 29.04.2009
(73) Titulaire: Snecma, 75015 Paris (FR)
(72) Inventeur: Fabre, Adrien Jacques Philippe, 92120 Montrouge (FR)
(74) Mandataire: Ramey, Daniel

(56) Documents cités:
- EP-A- 0 463 955
- EP-A- 1 439 282
- DE-C1- 10 163 951
- FR-A- 2 095 458
- FR-A- 2 893 093
- GB-A- 2 410 984

## Description

La présente invention concerne une roue d'une turbomachine, telle qu'un turboréacteur d'avion, et plus particulièrement la fixation d'anneaux de reprise d'efforts centrifuges sur une telle roue.

Chaque roue d'une turbomachine comprend une série d'aubes fixées ou formées sur un disque de rotor qui est solidaire d'un arbre tournant. En fonctionnement, les aubes exercent sur le disque de rotor des forces centrifuges très élevées, ce qui amène à dimensionner le disque de façon à ce qu'il puisse supporter ces forces avec une certaine marge de sécurité. Ce dimensionnement large accroît la masse du disque.

Pour éviter cet inconvénient, il est connu de recourir à des anneaux de matière composite à matrice métallique (CMM) qui sont montés sur les disques de rotor, de façon à supporter les efforts centrifuges exercés en fonctionnement par les aubes sur les disques, ce qui permet d'alléger les disques.

Ces anneaux présentent la particularité d'être à la fois légers et très résistants, ce qui leur permet d'absorber les contraintes centrifuges imputables à la masse des aubes aux vitesses de rotation élevées, de sorte que le disque reste soumis à une charge raisonnable.

Le maintien axial des anneaux de matière composite à matrice métallique nécessite traditionnellement de percer le disque pour le passage de vis ou de boulons, ces perçages étant sources de surcontraintes rendant en général le dimensionnement des pièces délicat, ou nécessite des usinages de l'anneau difficiles à réaliser et induisant une augmentation des risques de non qualité.

FR 2 893 093 divulgue une roue d'une turbomachine selon le préambule de la revendication 1.

L'invention a notamment pour but d'apporter une solution simple, économique et efficace à ces problèmes, permettant d'éviter les inconvénients de la technique connue.

Elle a en particulier pour objet un dispositif de rétention axiale d'anneaux de matière composite à matrice métallique qui permette l'utilisation d'anneaux non usinés à géométrie simple, tels que des anneaux à section rectangulaire dépourvus de perçages ou de moyens de fixation.

Elle propose à cet effet une roue d'une turbomachine telle qu'un turboréacteur d'avion, comprenant au moins un disque de rotor portant des aubes et au moins un anneau de matière composite à matrice métallique monté sur le disque pour la reprise des efforts centrifuges en fonctionnement, **caractérisée en ce qu**'elle comprend au moins un flasque annulaire formé de secteurs disposés bout à bout et comprenant chacun une partie annulaire radialement interne appliquée sur un flanc du disque et une partie radialement externe venant en appui sur l'anneau pour assurer la retenue axiale de ce dernier sur le disque, cette roue comprenant également des moyens de retenue radiale des secteurs de flasque sur le disque.

Le flasque annulaire selon l'invention permet la retenue axiale d'anneaux de forme géométrique simple, tels que des anneaux à section rectangulaire dépourvus d'organes de fixation.

Par ailleurs, la sectorisation du flasque facilite son montage à la périphérie du disque de rotor.

Selon une autre caractéristique de l'invention, les moyens de retenue radiale des secteurs de flasque comprennent des crochets formés sur le disque et dans lesquels les parties annulaires internes des secteurs de flasque sont engagées radialement de l'intérieur, et un jonc élastique annulaire appliqué sur le disque et sur la périphérie radialement interne des secteurs de flasque.

Les crochets du disque permettent ainsi un blocage du flasque radialement vers l'extérieur tandis que le jonc élastique annulaire permet un blocage du flasque radialement vers l'intérieur.

Avantageusement, le jonc a au repos un diamètre supérieur au diamètre interne du flasque et est fendu radialement.

II en résulte que le jonc doit être comprimé pour être mis en place au contact de la périphérie radialement interne des secteurs de flasque, de sorte que l'élasticité du jonc tend ensuite à le plaquer contre les secteurs de flasque et à solliciter ces derniers vers l'extérieur.

Le jonc comporte de préférence au moins deux ergots disposés de part et d'autre de sa fente radiale et destinés à être insérés dans des logements de forme complémentaire aménagés dans la périphérie interne des secteurs de flasque.

Ces ergots ont vocation à interdire la rotation du jonc par rapport au flasque afin de réduire l'usure de ce jonc et des surfaces du flasque et du disque en contact avec le jonc.

Selon une autre caractéristique de l'invention, les centres de gravité des secteurs de flasque sont écartés axialement de leurs points d'appui sur les moyens de retenue radiale prévus sur le disque de sorte que les efforts centrifuges exercés en fonctionnement sur les secteurs de flasque entraînent un pivotement des parties radialement externes des secteurs de flasque vers l'anneau.

De ce fait, le flasque exerce une force axiale de retenue de l'anneau sur le disque.

La périphérie interne des secteurs de flasque et la face du jonc en contact avec cette périphérie interne forment de préférence un angle de 45 degrés environ avec le flanc du disque.

Cette inclinaison de la surface de contact entre le jonc et les secteurs de flasque permet d'augmenter la tendance des parties radialement externes des secteurs de flasque à pivoter vers l'anneau, et donc d'accroître la force axiale exercée par le flasque sur l'anneau.

Le flasque, qui est avantageusement réalisé dans un matériau métallique tel qu'un alliage de titane, de nickel ou un acier, comprend de préférence 6 à 20 secteurs.

Ce nombre de secteurs permet notamment un montage aisé du flasque sur la périphérie du disque, le choix des matériaux formant le flasque étant avantageux compte tenu des contraintes mécaniques et thermiques auxquelles ce flasque peut être soumis.

Le jonc est également réalisé de préférence dans un matériau métallique tel qu'un alliage de titane, de nickel ou un acier.

II comporte avantageusement un revêtement à faible coefficient de frottement sur ses surfaces de contact avec le flasque et avec le disque.

Un tel revêtement permet de diminuer les frottements du jonc sur le flasque et le disque, et l'usure de leurs surfaces de contact qui en résulterait.

L'invention concerne également une turbomachine, **caractérisée en ce qu**'elle comprend au moins une roue de compresseur, de turbine ou de rouet centrifuge selon l'une des revendications précédentes.

L'invention sera mieux comprise et d'autres détails, avantages et caractéristiques de celle-ci apparaîtront plus clairement à la lecture de la description suivante faite à titre d'exemple non limitatif, en référence aux dessins annexés dans lesquels :
- la figure 1 est une vue schématique partielle en coupe axiale d'une roue de turbomachine selon l'invention ;
- les figures 2 à 5 sont des vues schématiques partielles en perspective de la roue de turbomachine de la figure 1 ;
- la figure 6 est une vue schématique de face du jonc à l'état libre et dans une position de montage ;
- la figure 7 est une vue partielle de face illustrant le montage du jonc sur le flasque ;
- la figure 8 est une vue schématique partielle en coupe axiale illustrant le maintien axial de l'anneau sur le disque.

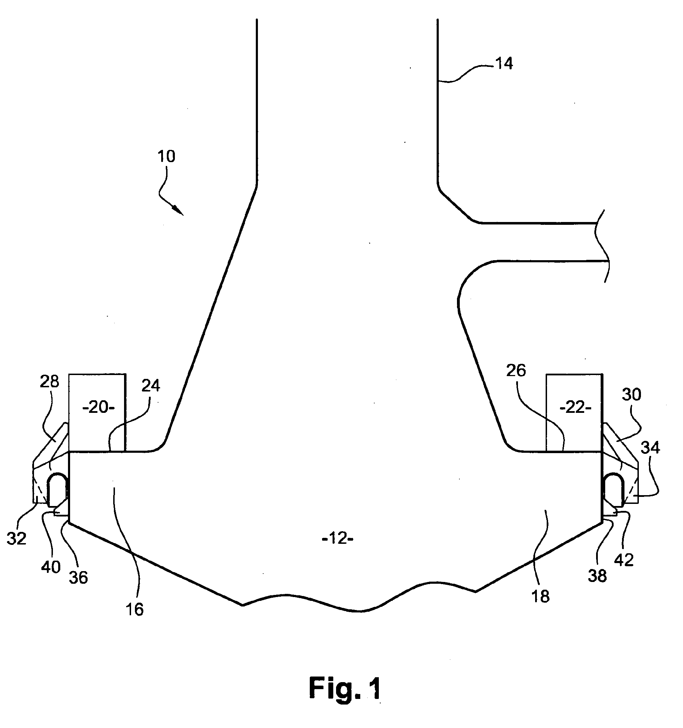

La figure 1 représente une roue 10 de turbomachine, telle qu'une roue de compresseur ou de turbine, ou encore de rouet centrifuge. Cette roue 10 comprend un disque 12, qui est traditionnellement réalisé dans un alliage de titane, de nickel, ou de tout matériau adéquat, et qui porte à sa périphérie des aubes 14 qui, dans l'exemple représenté, sont directement usinées dans le disque 12, mais qui pourraient également être rapportées sur le disque par des attaches, de type « brochées », « marteau » ou « sapin » par exemple, sans sortir du cadre de l'invention.

Le disque 12 comprend un rebord annulaire amont 16 et un rebord annulaire aval 18, qui sont entourés par deux anneaux de matière composite à matrice métallique (CMM), respectivement amont 20 et aval 22, destinés à reprendre les efforts centrifuges générés par les aubes 14 lors de la rotation du disque.

Ces anneaux 20, 22 sont par exemple réalisés en fibres de carbure de silicium dans une matrice à base de titane, mais ils pourraient également être réalisés avec d'autres types de fibres, telles que des fibres en carbure de bore ou en alumine, et d'autres types de matrices, par exemple à base de nickel.

Cette structure confère aux anneaux 20, 22 de meilleures caractéristiques mécaniques que celles du disque 12, et leur permet de reprendre efficacement les efforts centrifuges transmis par les aubes 14 au disque 12, qui peuvent être très importants compte tenu des vitesses de rotation élevées des roues de turbomachine.

Les anneaux 20, 22 ont une section rectangulaire et reposent sur les faces périphériques externes 24 et 26 des rebords 16 et 18 du disque. Ces anneaux sont bloqués axialement par deux flasques annulaires, respectivement amont 28 et aval 30, formés d'une série de secteurs annulaires montés bout à bout sur les flancs radiaux 36 et 38 des rebords 16, 18 du disque.

Pour cela, les secteurs des flasques annulaires 28, 30 sont engagés dans des crochets 32, 34 formés respectivement sur les flancs amont 36 et aval 38 du disque 12, et assurent un blocage radial des secteurs de flasque vers l'extérieur, ces secteurs étant poussés radialement vers l'extérieur par deux joncs élastiques annulaires 40 et 42 appliqués respectivement sur les flancs 36 et 38 du disque.

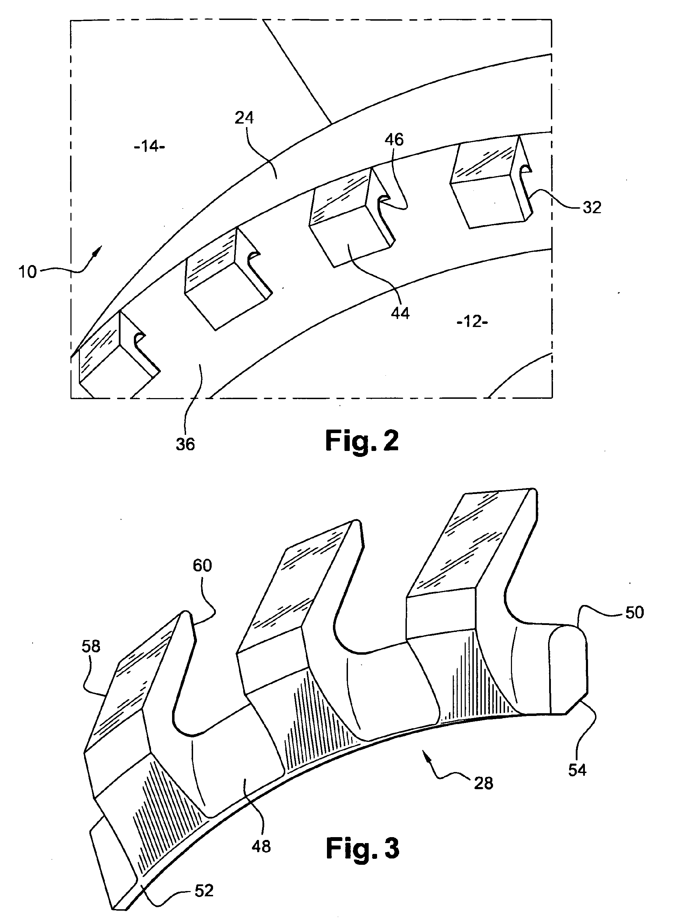

La figure 2 montre le flanc amont 36 du disque 12 de la roue 10, le disque étant représenté sans flasque et sans anneau. Cette figure 2 permet en particulier de distinguer les crochets 32 formés sur ce flanc amont 36, dont chacun comprend une patte 44 s'étendant radialement vers l'intérieur, de sorte que l'ensemble de ces crochets 32 forme une gorge annulaire 46 destinée à recevoir une partie annulaire radialement interne 48 de forme sensiblement conjuguée des secteurs du flasque annulaire amont 28.

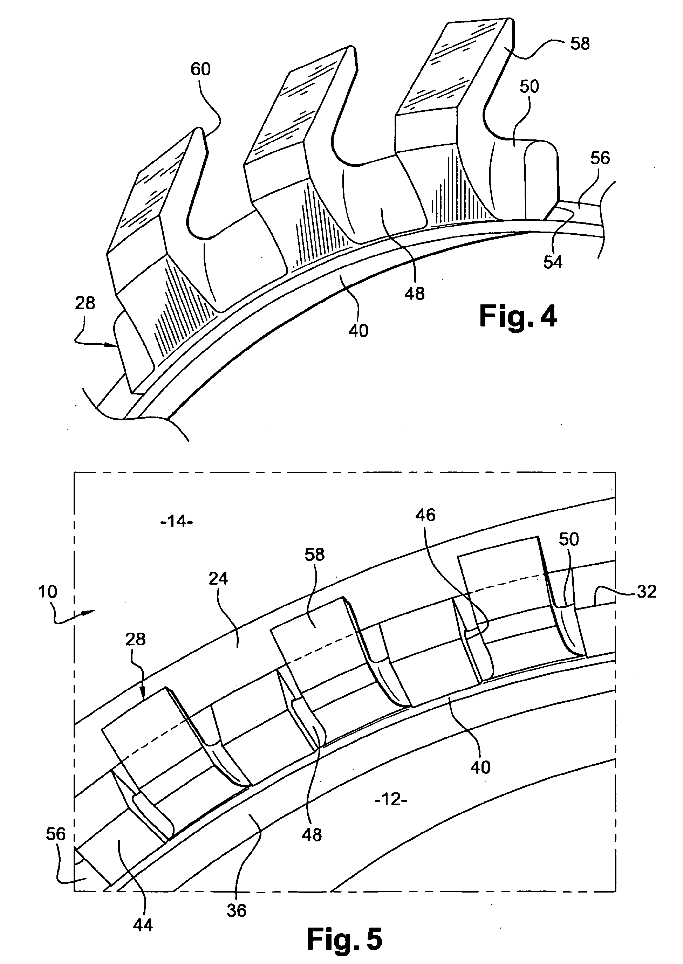

La figure 3 représente un secteur du flasque annulaire amont 28, dont la partie annulaire radialement interne 48 comporte une face extérieure incurvée 50 destinée à s'appliquer radialement sur le fond de la gorge annulaire 46 du disque 12, et un bord radialement interne comprenant une face amont 52 s'étendant axialement et une face aval 54 oblique de sorte que sa section augmente vers l'aval en suivant une pente de 45 degrés environ, cette face oblique 54 formant une face d'appui du jonc élastique annulaire 40, comme cela apparaîtra mieux sur les figures 4 et 5.

Le secteur du flasque 28 comprend également des pattes 58 s'étendant radialement vers l'extérieur depuis la partie annulaire radialement interne 48, chaque patte 58 comportant une surface d'appui axial 60 tournée vers l'aval et destinée à s'appliquer sur les anneaux de matière composite à matrice métallique 20 pour assurer leur retenue axiale.

De manière générale, le matériau dans lequel sont réalisés les secteurs des flasques annulaires 28, 30 peut être un alliage de titane ou de nickel ou un acier, ou tout autre matériau métallique apte à supporter les contraintes mécaniques et thermiques auxquelles sont soumis ces flasques.

Le nombre de secteurs nécessaires pour former chaque flasque 28, 30 dépend de paramètres de dimensionnement tels que la taille du disque 12, et doit en tout état de cause être suffisant pour faciliter le montage bout à bout de ces secteurs. Ce nombre est par exemple compris entre 8 et 12.

Le nombre de pattes 58 par secteur de flasque et le nombre total de pattes sur la circonférence d'un flasque est également déterminé par des paramètres de dimensionnement.

La figure 4 représente un secteur du flasque annulaire 28 associé au jonc élastique annulaire 40, le secteur et le jonc étant montrés isolés, tandis que la figure 5 les représente montés sur le flanc amont 36 du disque 12.

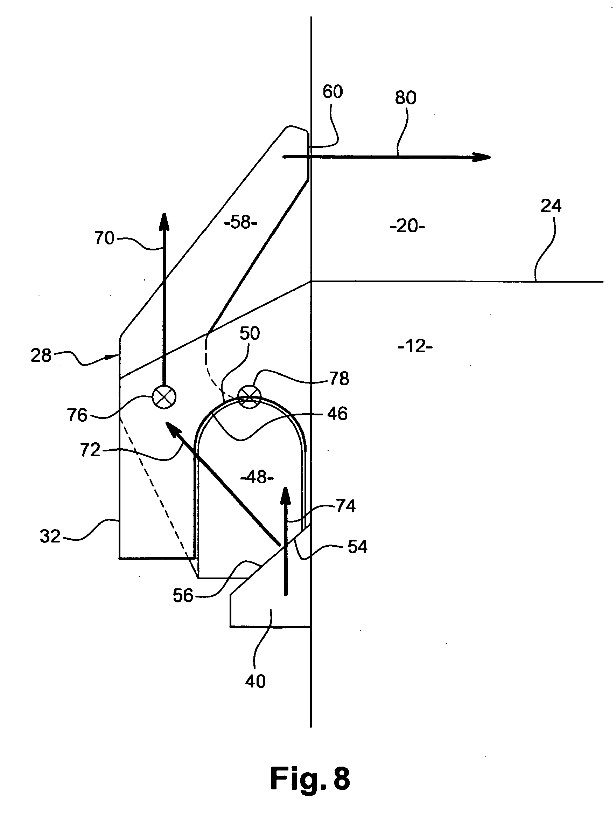

Comme cela apparaîtra mieux sur la figure 8, le jonc 40 a une section sensiblement triangulaire adaptée à la forme de la face oblique 54 des secteurs de flasque.

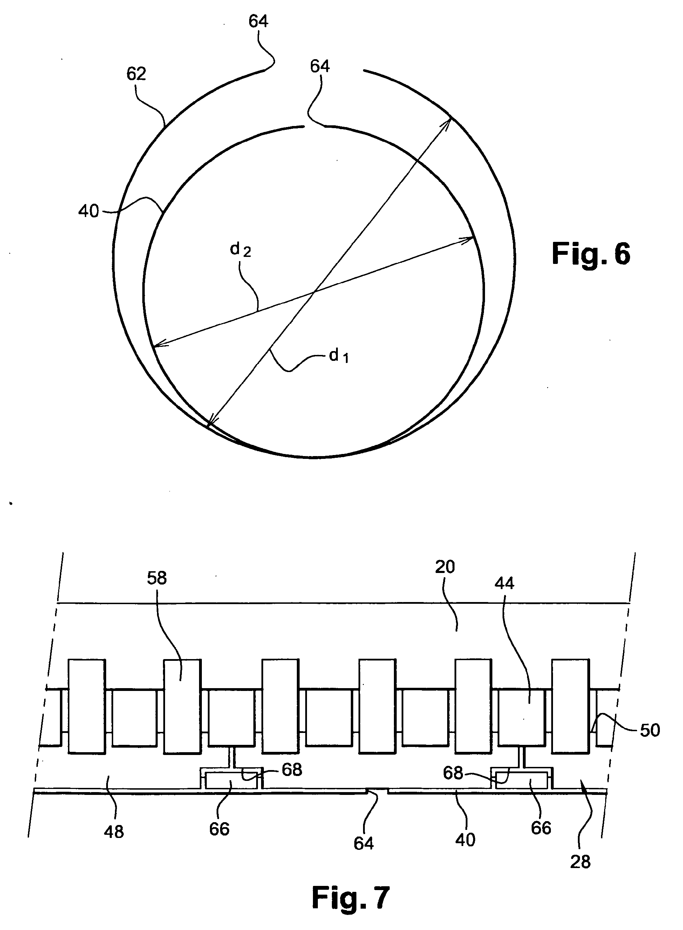

Comme le montre la figure 6 qui représente le jonc élastique annulaire à l'état libre 62 et installé 40 sous le flasque (non représenté sur cette figure), ce jonc comporte une fente 64 et son diamètre au repos d1 est supérieur à son diamètre d2 lorsqu'il est installé sous le flasque. Le montage du jonc 40 au contact de la face oblique 54 du bord interne du flasque 28 nécessite ainsi de resserrer le jonc 40, de sorte que son élasticité tend ensuite à plaquer ce jonc contre le bord interne du flasque, et par conséquent, à pousser la face 50 du flasque sur le fond de la gorge annulaire 46 du disque 12 (cf. figure 5), tout en empêchant le jonc de se désengager de son logement sous le flasque.

Par ailleurs, comme représenté schématiquement sur la figure 7, le jonc 40 comprend deux ergots 66 disposés de part et d'autre de la fente 64 et destinés à être engagés dans des logements correspondants 68 des secteurs du flasque 28 pour interdire la rotation du jonc 40 par rapport au flasque 28.

Le jonc élastique annulaire 40 peut par exemple être réalisé dans un alliage de titane, de nickel, ou dans un acier, et peut en outre comporter un revêtement à faible coefficient de frottement, d'un type connu, sur ses faces en contact respectivement avec le flasque et avec le disque pour réduire les frottements entre les différentes pièces et limiter ainsi l'usure de ces pièces.

Comme cela a été évoqué dans ce qui précède, les joncs élastiques annulaires 40, 42 ont pour première fonction d'assurer le maintien radial des secteurs des flasques 28, 30, notamment lorsque la turbomachine est à l'arrêt et que les secteurs des flasques ne sont pas plaqués dans leurs gorges annulaires 46 respectives sous l'effet des forces centrifuges pendant le fonctionnement de la turbomachine.

La figure 8 est une vue en coupe d'un secteur du flasque annulaire amont 28 monté sur le disque 12, pendant le fonctionnement de la turbomachine, et montre en particulier la transmission des efforts centrifuges dans les différentes pièces en relation avec le flasque 28.

Le secteur du flasque 28 est soumis à une force centrifuge 70 qui résulte de sa rotation et d'une force 72 appliquée à ce secteur de flasque par le jonc élastique annulaire 40.

En effet, ce jonc 40 est également soumis à une force centrifuge 74 du fait de sa rotation et il en transmet une composante 72 à la face oblique 54 du bord interne du secteur de flasque via sa face 56 externe de forme conjuguée. Le secteur du flasque 28 étant bloqué axialement du fait de l'engagement de sa partie radialement interne 48 dans la gorge annulaire 46 formée par les crochets 32 du disque 12, la force 72 qui lui est appliquée par le jonc 40 a pour résultante une force radiale orientée vers l'extérieur qui s'ajoute à la résultante des efforts centrifuges générés dans le secteur du flasque 28.

Le centre de gravité 76 du secteur du flasque 28 est écarté axialement vers l'amont du point de contact 78 entre la face incurvée 50 de la partie radialement interne 48 de ce secteur de flasque et la gorge annulaire 46 du disque 12, de sorte que la force 70 appliquée au secteur du flasque 28 génère un couple qui tend à faire tourner ce secteur de flasque vers l'aval autour de son point d'appui 78 sur les crochets 32 du disque. II en résulte une force axiale 80 dirigée vers l'aval et appliquée par les pattes 58 du secteur du flasque 28 à l'anneau de matière composite à matrice métallique 20, permettant de renforcer la retenue axiale de l'anneau 20 sur le disque.

Comme cela est expliqué ci-dessus, les joncs annulaires 40, 42 assurent donc une seconde fonction consistant à augmenter le couple de rotation des secteurs des flasques annulaires amont 28 et aval 30 autour de leurs zones d'appui 78 dans les gorges annulaires respectives 46 formées par les crochets 32 du disque 12.

L'exemple décrit dans ce qui précède concerne un disque 12 de roue de turbomachine dont la périphérie est renforcée par deux anneaux 20, 22 de matière composite à matrice métallique, respectivement à l'amont et à l'aval du disque, mais l'invention s'applique également à des disques renforcés par un seul anneau de ce type en amont ou en aval, ou par plusieurs anneaux répartis sur un même rayon en amont et/ou en aval, et/ou étagés sur des rayons différents.

L'invention permet donc l'utilisation d'anneaux de matière composite à matrice métallique ayant une section simple, par exemple rectangulaire, dont la fabrication est particulièrement simple et économique. Le montage des flasques annulaires assurant la rétention axiale de ces anneaux, selon l'invention, est particulièrement aisé, puisqu'il consiste simplement à engager les secteurs des flasques annulaires dans une gorge correspondante du disque puis à monter un jonc élastique annulaire sous chaque flasque pour empêcher les secteurs du flasque de se désengager de la gorge du disque.

## Revendications

1. Roue (10) d'une turbomachine telle qu'un turboréacteur d'avion, comprenant au moins un disque (12) de rotor portant des aubes (14) et au moins un anneau de matière composite à matrice métallique (20, 22) monté sur le disque (12) pour la reprise des efforts centrifuges en fonctionnement, **caractérisée en ce qu'**elle comprend au moins un flasque annulaire (28,30) formé de secteurs disposés bout à bout et comprenant chacun une partie annulaire radialement interne (48) appliquée sur un flanc (36, 38) du disque (12) et une partie radialement externe (58) venant en appui sur l'anneau pour assurer la retenue axiale de ce dernier sur le disque, cette roue (10) comprenant également des moyens de retenue radiale (32, 34, 40, 42) des secteurs de flasque sur le disque.

2. Roue de turbomachine (10) selon la revendication 1, **caractérisée en ce que** les moyens de retenue radiale des secteurs de flasque (28, 30) comprennent des crochets (32, 34) formés sur le disque (12) et dans lesquels les parties annulaires internes (48) des secteurs de flasque sont engagées radialement de l'intérieur.

3. Roue de turbomachine (10) selon la revendication 1 ou 2, **caractérisée en ce que** les moyens de retenue radiale des secteurs de flasque (28, 30) comprennent un jonc élastique annulaire (40, 42) appliqué sur le disque (12) et sur la périphérie radialement interne (54) des secteurs de flasque.

4. Roue de turbomachine (10) selon la revendication 3, **caractérisée en ce que** le jonc (40, 42) a au repos un diamètre supérieur au diamètre interne du flasque (28, 30) et est fendu radialement.

5. Roue de turbomachine (10) selon la revendication 4, **caractérisée en ce que** le jonc (40, 42) comporte au moins deux ergots (66) disposés de part et d'autre de sa fente radiale (64) et destinés à être insérés dans des logements (68) de forme complémentaire aménagés dans la périphérie interne (54) des secteurs de flasque.

6. Roue de turbomachine (10) selon l'une des revendications 3 à 5, **caractérisée en ce que** la périphérie interne (54) des secteurs de flasque et la face (56) du jonc (40, 42) en contact avec cette périphérie interne forment un angle de 45 degrés environ avec le flanc (36, 38) du disque (12).

7. Roue de turbomachine (10) selon l'une des revendications précédentes, **caractérisée en ce que** les centres de gravité (76) des secteurs de flasque sont écartés axialement de leurs points d'appui (78) sur les moyens de retenue radiale (32, 34) prévus sur le disque (12) de sorte que les efforts centrifuges (70) exercés en fonctionnement sur les secteurs de flasque entraînent un pivotement des parties radialement externes (58) des secteurs de flasque (28, 30) vers l'anneau (20, 22).

8. Roue de turbomachine (10) selon l'une des revendications précédentes, **caractérisée en ce que** le flasque (28, 30) est réalisé dans un matériau métallique tel qu'un alliage de titane, de nickel ou un acier.

9. Roue de turbomachine (10) selon l'une des revendications précédentes, **caractérisée en ce que** le flasque (28, 30) comprend de 6 à 20 secteurs.

10. Roue de turbomachine (10) selon l'une des revendications 3 à 9, **caractérisée en ce que** le jonc (40, 42) est réalisé dans un matériau métallique tel qu'un alliage de titane, de nickel ou un acier.

11. Roue de turbomachine (10) selon l'une des revendications 3 à 10, **caractérisée en ce que** le jonc (40, 42) comporte un revêtement à faible coefficient de frottement sur ses surfaces de contact avec le flasque (28, 30) et avec le disque (12).

12. Roue de turbomachine (10) selon l'une des revendications précédentes, **caractérisée en ce qu'**elle comprend au moins deux anneaux (20, 22) de matière composite à matrice métallique, montés sur les flancs amont et aval respectivement du disque de rotor (12).

13. Turbomachine, **caractérisée en ce qu'**elle comprend au moins une roue (10) de compresseur, de turbine ou de rouet centrifuge selon l'une des revendications précédentes.

## Claims

1. Wheel (10) of a turbine engine such as an airplane turbojet, including at least one rotor disk (12) having blades (14) and at least one ring of a metal matrix composite material (20, 22) mounted on the disk (12) in order to take up centrifugal forces during operation, **characterized in that** it includes at least one annular flange (28, 30) formed by sections arranged end-to-end and each including a radially internal annular portion (48) applied on a flank (36, 38) of the disk (12) and a radially external portion (58) coming into contact with the ring in order to ensure the axial holding of the latter on the disk, which wheel (10) also includes means (32,-34, 40, 42) for radially holding flange sections on the disk.

2. Turbine engine wheel (10) according to claim 1, **characterized in that** the means for radially holding flange sections (28, 30) include hooks (32, 34) formed on the disk (12) and in which the internal annular portions (48) of the flange sections are radially engaged from the inside.

3. Turbine engine wheel (10) according to claim 1 or 2, **characterized in that** the means for radially holding flange sections (28, 30) include a resilient annular snap ring (40, 42) applied on the disk (12) and on the radially internal periphery (54) of the flange sections.

4. Turbine engine wheel (10) according to claim 3, **characterized in that** the snap ring (40, 42), at rest, has a diameter larger than the internal diameter of the flange (28, 30), and is radially split.

5. Turbine engine wheel (10) according to claim 4, **characterized in that** the snap ring (40, 42) comprises at least two lugs (66) arranged on each side of the radial slot (64) and intended to be inserted into recesses (68) with a complementary shape formed in the internal periphery (54) of the flange sections.

6. Turbine engine wheel (10) according to one of claims 3 to 5, **characterized in that** the internal periphery (54) of the flange sections and the face (56) of the snap ring (40, 42) in contact with this internal periphery form an angle of around 45 degrees with the flank (36, 38) of the disk (12).

7. Turbine engine wheel (10) according to one of the preceding claims, **characterized in that** the centers of gravity (76) of the flange sections are axially spaced from their points of contact (78) on the radial holding means (32, 34) provided on the disk (12) so that the centrifugal forces (70) exerted, during operation, on the flange sections cause the radially external portions (58) of the flange sections (28, 30) to pivot toward the ring (20, 22).

8. Turbine engine wheel (10) according to one of the preceding claims, **characterized in that** the flange (28, 30) is made of a metal material such as a titanium or nickel alloy or a steel.

9. Turbine engine wheel (10) according to one of the preceding claims, **characterized in that** the flange (28, 30) includes 6 to 20 sections.

10. Turbine engine wheel (10) according to one of claims 3 to 9, **characterized in that** the snap ring (40, 42) is made of a metal material such as a titanium or nickel alloy or a steel.

11. Turbine engine wheel (10) according to one of claims 3 to 10, **characterized in that** the snap ring (40, 42) comprises a coating with a low coefficient of friction on its surfaces of contact with the flange (28, 30) and with the disk (12).

12. Turbine engine wheel (10) according to one of the preceding claims, **characterized in that** it includes at least two rings (20, 22) of metal matrix composite material, mounted on the upstream and downstream flanks, respectively, of the rotor disk (12).

13. Turbine engine, **characterized in that** it includes at least one compressor, turbine or centrifugal impeller wheel (10) according to one of the preceding claims.

## Patentansprüche

1. Rad (10) einer Turbomaschine wie beispielsweise eines Flugzeugturbotriebwerks, welches Rad mindestens eine Rotorscheibe (12), die Schaufeln (14) trägt und mindestens einen an der Rotorscheibe (12) angebrachten Ring aus Verbundwerkstoff mit Metallmatrix (20, 22) zur Aufnahme der Zentrifugalkräfte in Betrieb aufweist,
**dadurch gekennzeichnet,**
**dass** es mindestens einen ringförmigen Flansch (28, 30) aufweist, der aus aneinander angrenzend angeordneten Sektoren gebildet ist, die jeweils einen radial innen liegenden ringförmigen Abschnitt (48) enthalten, der an einer Seitenfläche (36, 38) der Scheibe (12) anliegt, sowie einen radial außen liegenden Abschnitt (58), der in Anlage an dem Ring kommt, um dessen axialen Halt an der Scheibe zu gewährleisten, wobei dieses Rad (10) ferner radiale Haltemittel (32, 34, 40, 42) zum Festhalten der Flanschsektoren an der Scheibe aufweist.

2. Turbomaschinenrad (10) nach Anspruch 1,
**dadurch gekennzeichnet,**
**dass** die radialen Haltemittel der Flanschsektoren (28, 30) Haken (32, 34) umfassen, die an der Scheibe (12) gebildet sind und in die die innen liegenden ringförmigen Abschnitte (48) der Flanschsektoren radial von innen in Eingriff gebracht sind.

3. Turbomaschinenrad (10) nach Anspruch 1 oder 2,
**dadurch gekennzeichnet,**
**dass** die radialen Haltemittel der Flanschsektoren (28, 30) einen ringförmigen, elastischen Wulst (40, 42) umfassen, der auf die Scheibe (12) und auf den radial inneren Umfang (54) der Flanschsektoren aufgebracht ist.

4. Turbomaschinenrad (10) nach Anspruch 3,
**dadurch gekennzeichnet,**
**dass** der Wulst (40, 42) einen Durchmesser hat, der in Ruhestellung größer ist als der Innendurchmesser des Flanschs (28, 30), und dass er mit einem radialen Schlitz versehen ist.

5. Turbomaschinenrad (10) nach Anspruch 4,
**dadurch gekennzeichnet,**
**dass** der Wulst (40, 42) mindestens zwei Nasen (66) aufweist, die beiderseits seines radialen Schlitzes (64) angeordnet sind und dazu bestimmt sind, in Aufnahmen (68) von komplementärer Form, die an dem Innenumfang (54) der Flanschsektoren ausgeführt sind, eingeklinkt zu werden.

6. Turbomaschinenrad (10) nach einem der Ansprüche 3 bis 5,
**dadurch gekennzeichnet,**
**dass** der Innenumfang (54) der Flanschsektoren und die Seite (56) des Wulstes (40, 42), die sich in Kontakt mit diesem Innenumfang befindet, einen Winkel von ca. 45° mit der Seitenfläche (36, 38) der Scheibe (12) bilden.

7. Turbomaschinenrad (10) nach einem der vorherigen Ansprüche,
**dadurch gekennzeichnet,**
**dass** die Schwerpunkte (76) der Flanschsektoren von ihren Anlagepunkten (78) an den radialen Haltemitteln (32, 34), die an der Scheibe (12) vorgesehen sind, axial beabstandet sind, so dass die Zentrifugalkräfte (70), die im Betrieb auf die Flanschsektoren wirken, ein Schwenken der radial außen liegenden Abschnitte (58) der Flanschsektoren (28, 30) in Richtung des Rings (20, 22) zur Folge haben.

8. Turbomaschinenrad (10) nach einem der vorherigen Ansprüche,
**dadurch gekennzeichnet,**
**dass** der Flansch (28, 30) aus einem metallischen Werkstoff wie beispielsweise einer Titan- oder Nickellegierung oder einem Stahl hergestellt ist.

9. Turbomaschinenrad (10) nach einem der vorherigen Ansprüche,
**dadurch gekennzeichnet,**
**dass** der Flansch (28, 30) 6 bis 20 Sektoren umfasst.

10. Turbomaschinenrad (10) nach einem der Ansprüche 3 bis 9,
**dadurch gekennzeichnet,**
**dass** der Wulst (40, 42) aus einem metallischen Werkstoff wie beispielsweise einer Titan- oder Nickellegierung oder einem Stahl hergestellt ist.

11. Turbomaschinenrad (10) nach einem der Ansprüche 3 bis 10,
**dadurch gekennzeichnet,**
**dass** der Wulst (40, 42) eine Beschichtung mit einem geringen Reibungskoeffizienten an seinen Kontaktflächen mit dem Flansch (28, 30) und mit der Scheibe (12) aufweist.

12. Turbomaschinenrad (10) nach einem der vorherigen Ansprüche,
**dadurch gekennzeichnet,**
**dass** es mindestens zwei Ringe (20, 22) aus Verbundwerkstoff mit Metallmatrix aufweist, die an den der vorderen bzw. hinteren Seitenfläche der Rotorscheibe (12) angebracht sind.

13. Turbomaschine,
**dadurch gekennzeichnet,**
**dass** sie mindestens ein Verdichter-, Turbinen- oder Zentrifugenrad (10) nach einem der vorherigen Ansprüche aufweist.
